(19) Europäisches Patentamt

European Patent Office

Office européen des brevets

(11) **EP 1 351 333 A2**

(12) **DEMANDE DE BREVET EUROPEEN**

(43) Date de publication:
**08.10.2003 Bulletin 2003/41**

(51) Int Cl.[7]: **H01Q 3/26**, H01Q 3/30,
G01S 13/24, G01S 13/42

(21) Numéro de dépôt: **03100859.2**

(22) Date de dépôt: **01.04.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **05.04.2002 FR 0204264**

(71) Demandeur: **Thales**
**75008 Paris (FR)**

(72) Inventeur: **Auvray, Gérard**
**94117 CX Arcueil (FR)**

(74) Mandataire: **Lucas, Laurent et al**
**THALES Intellectual Property,**
**31-33, avenue Aristide Briand**
**94117 Arcueil Cédex (FR)**

(54) **Antenne adaptative et radar comportant une telle antenne**

(57) La présente invention concerne la réalisation d'une antenne adaptative multifaisceaux, à formation des faisceaux par le calcul, ou FFC, dont les faisceaux sont dépourvus de lobes de réseaux parasites.

L'invention concerne également un radar équipé de moyens de synthèse et d'émission d'impulsion lui permettant, en association avec l'antenne selon l'invention, de conserver une sélectivité spatiale à l'émission, et par suite de posséder toutes les qualités de sélectivité spatiale des antennes mono faisceaux actuelles.

L'invention s'applique notamment au radars à balayage électronique multifaisceaux, posés à terre ou embarqués.

FIG.8

## Description

La présente invention concerne la réalisation d'une antenne adaptative multifaisceaux, à formation de faisceaux par le calcul, dont les faisceaux sont notamment dépourvus de lobes de réseaux parasites. Cette antenne multifaisceaux présente en outre une sélectivité spatiale à l'émission. Ce dispositif s'applique notamment à la lutte contre le brouillage des radars.

Les antennes actuelles qui mettent en oeuvre la formation adaptative de faisceaux par le calcul, ou FFC adaptative, présentent des inconvénients importants à l'émission et à la réception. Les inconvénients rencontrés sont notamment liés à leur structure.

Ces antennes à FFC adaptative sont constituées d'un grand nombre de modules d'émission / réception encore appelés T/R modules. Les T/R modules sont combinés entre eux pour former des sous-réseaux. Chaque sous-réseau se comporte comme une antenne élémentaire ayant ses propres plan et centre de phase.

En ce qui concerne la réception d'un signal, la formation d'un faisceau se fait en combinant les signaux issus des sous-réseaux qui constituent l'antenne globale. Pour constituer le signal correspondant à un faisceau donné chaque signal issu d'un sous-réseau est affecté d'un gain et d'un déphasage déterminé. Puis tous les signaux ainsi corrigés sont sommés. Les valeurs des pondérations en gain et en phase de chaque sous-réseau sont déterminées par des procédés connus, issus du domaine de l'antibrouillage adaptatif.

Comme dans le cas d'une antenne à balayage électronique mono faisceau classique, l'orientation globale de la grappe de faisceau d'une antenne multifaisceaux est réalisée quant à elle en jouant sur la phase relative des signaux issus des T/R modules. En agissant ainsi, on modifie l'orientation globale du plan de phase de l'antenne.

L'association des T/R modules en sous-réseaux telle qu'elle est réalisée, revient à effectuer une décomposition de l'antenne globale en antennes élémentaires de faibles dimensions. Chaque antenne ainsi définie a son propre plan de phase.

Cette décomposition induit, entre autres, les conséquences suivantes :

- La dimension de ces antennes élémentaires étant faible par rapport à l'antenne globale, celles-ci présentent donc à l'émission aussi bien qu'à la réception un lobe dont le diagramme est plus large que celui d'une antenne de grande dimension classique.
- La combinaison de ces lobes entraîne par ailleurs la présence au niveau de l'antenne globale de lobes secondaires plus importants que ceux d'une antenne mono faisceau.

La structure en sous-réseaux des antennes à FFC adaptative actuelles a pour effet de rendre celle-ci moins performantes que les antennes à balayage électronique classiques notamment au niveau des lobes secondaires.

Des études menées par ailleurs montrent que la reconstitution correcte d'un faisceau à partir de sous-ensembles dont les plans de phase ne sont pas orientés dans la direction du faisceau, implique que la distance entre les centres de phase des différents sous-ensembles doit être inférieure à la demi longueur d'onde du signal. Dans le cas des sous-réseaux constituant une antenne à FFC, cette condition de distance n'est pas satisfaite et le faisceau formé est accompagné de lobes parasites.

En revanche, dans le cas où les sous-ensembles présentent tous un plan de phase orienté dans la direction du faisceau, il n'y a pas formation de lobes de réseaux.

On conçoit aisément que pour une antenne multifaisceaux à sous-réseaux, la condition d'orientation ci-dessus ne peut être réalisée, dans le meilleur des cas, que pour un seul faisceau. Les plans de phase des sous-réseaux ne sont pas, dans la plupart des cas, orientés dans la direction du faisceau à former. La seule façon accessible de former un faisceau dans une direction donnée est d'ajuster la phase du signal issu de chaque sous-réseau pour obtenir, par recombinaison, le faisceau voulu.

Les sous-réseaux constituent donc des antennes élémentaires qui présentent par construction des centres de phase éloignés les uns des autres. La distance entre leurs centres de phase est grande par rapport à la longueur d'onde. De ce fait, la mise en phase des signaux issus des différents sous-réseaux entraîne, lors de la formation du faisceau, l'apparition de lobes parasites. Ces lobes parasites ou lobes de réseaux sont la reproduction du lobe de faisceau désiré, suivant des directions déterminées par la distance séparant les centres de phase des sous-réseaux.

Ainsi, du fait de leur organisation en sous-réseaux, les antennes à FFC actuelles forment des faisceaux qui présentent une périodicité spatiale non voulue.

La présence de ces lobes de réseaux a pour conséquence de rendre les antennes actuelles vulnérables au brouillage reçu dans la direction des lobes de réseaux. L'élimination d'un brouilleur pénétrant par un lobe de réseau s'accompagne d'un affaiblissement important du signal dans la direction du faisceau.

D'autres inconvénients sont par ailleurs liés à la nécessité qu'ont les dispositifs actuels équipés d'antennes à FFC d'émettre avec un diagramme de rayonnement élargi. Ce diagramme élargi est nécessaire pour permettre la réception d'un signal dans toutes les directions pointées par les faisceaux formés simultanément. Ce diagramme, plus large que celui d'une antenne classique, présente l'inconvénient d'entraîner une perte de sélectivité spatiale à l'émission. La sélectivité n'est plus alors réalisée que par le lobe du faisceau de réception, qui présente, comme cela a été dit précédemment, des lobes secondaires de mauvaise qualité.

Un but de l'invention est notamment de pallier les inconvénients cités. A cet effet l'invention a pour objet une antenne à FFC adaptative permettant la constitution simultanée de plusieurs faisceaux. L'antenne selon l'invention a notamment pour caractéristique de présenter pour chaque faisceau un plan de phase orienté perpendiculairement à la direction du faisceau.

L'antenne selon l'invention comporte notamment des T/R modules assemblés en clusters. Les clusters sont eux-mêmes assemblés par groupes pour former des sous-réseaux et la combinaison des sous-réseaux forme les faisceaux.

L'invention a notamment pour avantage de présenter des faisceaux de réception simultanés de même qualité que le faisceau d'une antenne à balayage électronique mono faisceau classique, en particulier en ce qui concerne le niveau des lobes secondaires.

Elle présente également l'avantage d'être dépourvue de lobes de réseaux. Elle n'est donc pas sensible aux brouilleurs localisés dans la direction de ces lobes.

Avantageusement elle permet de réaliser dans la direction de chaque faisceau une émission dont le diagramme assure la même sélectivité spatiale que dans une antenne mono faisceau classique.

D'autres caractéristiques et avantages de l'invention apparaîtront à l'aide de la description qui suit, faite en regard des figures annexées qui représentent :

La figure 1, une illustration des problèmes liés à l'existence d'un large diagramme d'émission et à la présence de lobes de réseaux.

La figure 2, une illustration de la formation d'un faisceau par association de différents sous-réseaux dans les antennes actuelles.

La figure 3, L'illustration d'une décomposition possible d'une antenne en clusters ou groupes de T/R modules.

La figure 4, le schéma de principe de réalisation d'un cluster.

La figure 5, une illustration de la formation d'un faisceau dans une antenne selon l'invention.

La figure 6, La représentation d'une organisation possible en faisceaux selon l'invention.

La figure 7, l'illustration d'un exemple d'organisation en sous-réseaux selon l'invention.

La figure 8, l'illustration schématique de la chaîne complète de formation et de traitement d'un faisceau.

La figure 9, une représentation partielle de la forme d'un diagramme d'émission selon l'invention.

La figure 10, une représentation du découpage temporel d'une impulsion d'émission selon l'invention.

On a **vu** précédemment que comme dans le cas d'une antenne à balayage électronique mono faisceau classique, l'orientation globale d'une antenne multifaisceaux est réalisée en jouant sur la phase relative des signaux issus des T/R modules. Pour des raisons de clarté, dans la suite de la description on considère que l'antenne garde une orientation constante et que le déphasage appliqué au T/R module est nul.

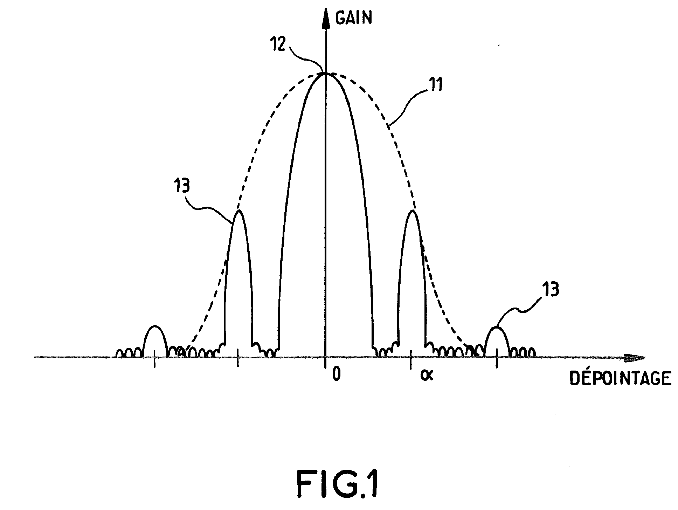

La figure 1 illustre les inconvénients induits par le mode de réalisation des antennes à FFC adaptative actuelles. Cette figure représente dans un seul plan et pour un faisceau donné, orienté dans un axe pris comme référence, les diagrammes d'émission et de réception. Le diagramme d'émission 11 étant nécessairement large, l'énergie susceptible d'être reçu par le faisceau 12 n'est pas assez significativement différente de celle susceptible d'être reçue par les lobes de réseaux 13. D'autre part, l'apparition d'un signal brouilleur dans un de ces lobes de réseaux, affectera de manière très importante la détection d'éventuels échos par le faisceau correspondant.

Ces lobes de réseaux ont une répétitivité angulaire $\alpha$ qui dépend du rapport $d/\lambda$ de la distance relative des centres de phase des sous-réseaux à la longueur d'onde du signal.

La présence de ces lobes de réseaux a pour conséquence de générer une ambiguïté sur la position angulaire d'un éventuel écho reçu par un radar équipé d'une antenne à FFC adaptative actuelle. Elle rend également le radar sensible au brouillage par les lobes de réseaux.

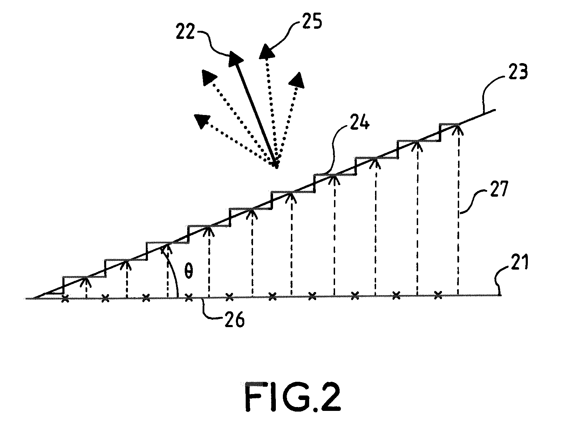

La figure 2 illustre de manière imagée l'origine du phénomène décrit précédemment dans le cas d'un seul faisceau. Par souci de clarté, les sous-réseaux sont représentés sur cette figure comme étant contigus et de même taille. Dans les antennes à FFC actuelles, leurs plans de phase sont orientés dans une direction fixe pour tous les faisceaux. Des structures différentes, comportant par exemple des réseaux de tailles différentes et présentant un certain recouvrement, sont bien évidemment possibles.

La droite 21 représente le plan de phase de l'antenne globale et θ l'angle de dépointage du faisceau à former dont la direction est matérialisée par la flèche 22. La droite 23 représente le plan de phase idéal à réaliser pour obtenir le dépointage voulu. Ce plan idéal ne peut être obtenu qu'en ajustant le déphasage au niveau des T/R modules, ce qui ne peut pas être, comme cela a été dit précédemment, réalisé simultanément pour chacun des faisceaux à former.

En raison de l'organisation en sous-réseaux, cette droite va en réalité être approximée par la courbe en escalier 24. Le signal correspondant à celui reçu par le faisceau considéré est obtenu par combinaison en amplitude et en phase des signaux issus de chaque sous-réseau 26.. Néanmoins la correction d'amplitude et de phase apportée aux signaux issus de chacun des sous-réseaux ne permet pas l'orientation du plan de phase de chaque sous-réseau dans la direction du faisceau. Celle-ci fait un angle θ généralement non nul avec la normale au plan de phase d'un sous-réseau. Chaque pallier de cette courbe représente le plan de phase du sous-réseau correspondant. La combinaison des signaux est représentée sur la figure par les flèches pointillées 27. La formation du faisceau désiré 22 s'accompagne également de celle des lobes de réseaux 25.

Dans l'exemple de la figure tous les sous-réseaux qui constituent le faisceau sont identiques et espacés d'une distance d. Le diagramme $G_m$ de réception associé à un faisceau $F_m$ a une expression de la forme suivante :

$$G_m = G_{SR}(\theta) \cdot \sum_n A_{mn} \cdot \exp(j\varphi_{mn}) \cdot \exp(-j2n\pi\frac{d}{\lambda}\sin\theta) \qquad (1)$$

Où:

- $G_{SR}(\theta)$ représente le diagramme d'un sous-réseau,
- $A_{mn}$ et $\exp(j\varphi_{mn})$ correspondent aux corrections d'amplitude et de phase appliquées au signal issu du sous-réseau n dans la composition du faisceau $F_m$,
- n.d représente la distance du centre de phase du sous réseau n au centre du faisceau.
- θ représente l'angle entre la normale au plan de phase du sous réseau et la direction du faisceau.

Dans cette expression on voit apparaître le facteur $\exp(-j2n\pi\frac{d}{\lambda}\sin\theta)$ responsable de la présence des lobes de réseaux. Ce facteur devient neutre dans le cas où θ est nul ce qui correspond au cas les plans de phase des sous réseaux sont tous perpendiculaires à la direction du faisceau. Ce facteur devient également neutre dans le cas où $d/_\lambda$ est très inférieur à 1, ce qui n'est pas réalisable étant donnée la taille des sous-réseaux.

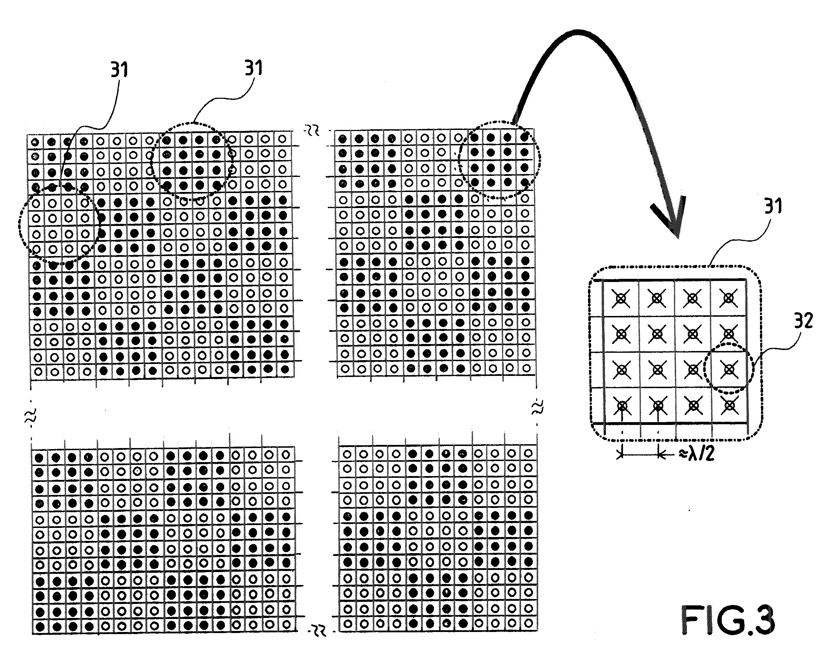

La figure 3 illustre le principe d'organisation d'une antenne à FFC adaptative selon l'invention. Dans cette antenne les T/R modules ne sont plus regroupés directement en sous-réseaux mais sont d'abord combinés par petits groupes de façon à constituer des unités de base 31 appelées clusters. Un cluster est constitué d'un groupe de T/R modules reliés les uns aux autres au travers de circuits combineurs hyperfréquence. Comme sur la figure 3, les clusters constituant l'antenne sont par exemple disjoints et leur juxtaposition reconstitue l'intégralité de l'antenne. Le cluster représente l'élément de base d'une antenne à FFC adaptative selon l'invention.

Le nombre Q de T/R modules entrant dans la composition d'un cluster est quelconque et peut, par exemple, varier d'un cluster à l'autre dans une même antenne. A titre d'exemple, la figure 3 représente une antenne constituée d'un assemblage de clusters identiques formés chacun de seize T/R modules 32. Les T/R modules sont espacés les uns des autres d'une distance voisine de la demi-longueur d'onde du signal. Chaque T/R module est par ailleurs équipé d'un contrôle d'amplitude et de phase, qui permet d'orienter le plan de phase global de l'antenne.

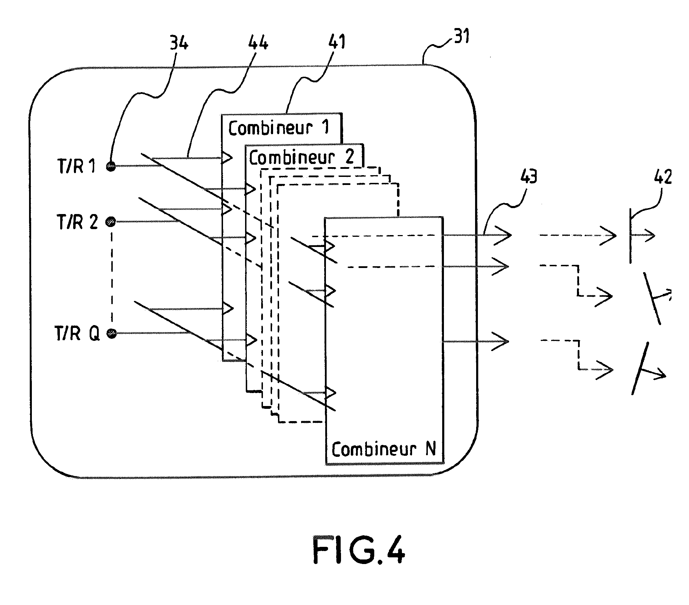

La figure 4 illustre la structure interne d'un cluster 31. Au sein du cluster la sortie de chaque T/R module 32 est distribuée en parallèle sur les entrées de plusieurs combineurs hyperfréquence 41 indépendants les uns des autres. La présence de plusieurs combineurs dans un cluster permet d'obtenir à partir d'un seul groupe de T/R modules, un assemblage équivalent à plusieurs antennes élémentaires 42 ayant chacune un plan de phase. Un choix avantageux est ici de constituer des cluster ayant autant de circuits combineurs et donc autant de sorties que l'on veut former de faisceaux.

Un combineur donné applique à chaque signal entrant 44, un déphasage dont la valeur dépend de l'orientation du plan de phase de l'antenne élémentaire qu'il réalise. Il effectue ensuite la somme de tous les signaux qu'il combine. Un cluster possède ainsi autant de sorties 43 que de faisceaux à former.

Une antenne à FFC adaptative selon l'invention destinée à former N faisceaux, est donc notamment formée de clusters comprenant chacun au moins N circuits combineurs. Ainsi, pour un cluster quelconque, le signal de sortie issu du circuit combineur associé à un faisceau donné représente une composante du signal reçu dans la direction du faisceau en question.

Au regard de chacun des N faisceaux un cluster se comporte donc avantageusement comme une antenne élémentaire dont le plan de phase est orienté de manière optimale, c'est à dire perpendiculairement à la direction du faisceau.

Les circuits combineurs réalisent également la mise en phase des signaux reçus de façon à ce que les signaux issus des cluster puissent être directement sommés pour constituer le signal résultant du faisceau.

Le cluster est une structure figée destinée à entrer dans la composition de faisceaux donnés. Au niveau de l'antenne, la position et l'orientation relative des faisceaux sont donc également figées.

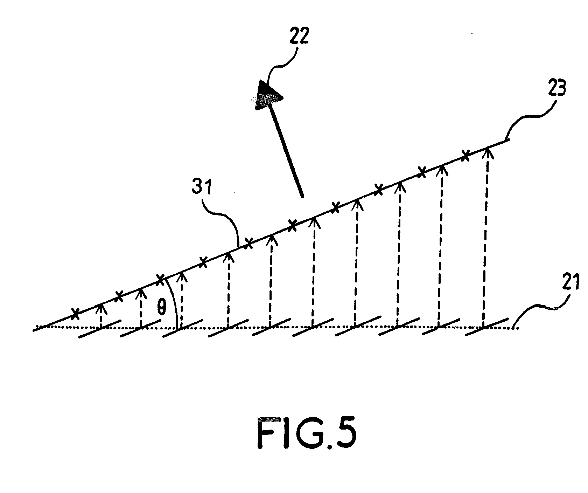

La figure 5 donne une représentation imagée de la formation d'un faisceau dans une antenne à FFC adaptative selon l'invention. Comme dans le cas des sous-réseaux de la figure 2, les clusters sont pris, à titre d'exemple simple, contigus et de même dimension. On constate ici que pour un plan de phase 23 donné, correspondant à une direction de faisceau 22, les plans de phase des clusters 31 utilisés pour former le faisceau ont la même orientation 23 perpendiculaire à la direction du faisceau. Le signal correspondant à celui reçu par le faisceau considéré est alors obtenu par sommation des signaux issus de chaque cluster.

Avantageusement, bien que la distance de leurs centres de phase supérieurs à la longueur d'onde du signal reçu, l'orientation des plans de phase de clusters perpendiculairement à la direction du faisceau exclue rend nulle la valeur de $\sin\theta$ et neutralise le terme $\exp(-j2n\pi\frac{d}{\lambda}\sin\theta)$ dans l'expression (1) et évite, comme on l'a vu précédemment, la formation de Lobes de réseaux.

Chaque cluster disposant d'au moins N sorties correspondant chacune à un faisceau donné, la représentation de la figure 5 qui traite d'un faisceau est bien entendu extensible aux N faisceaux pris simultanément. L'antenne à FFC adaptative selon l'invention a en effet pour avantage de traiter simultanément les N faisceaux.

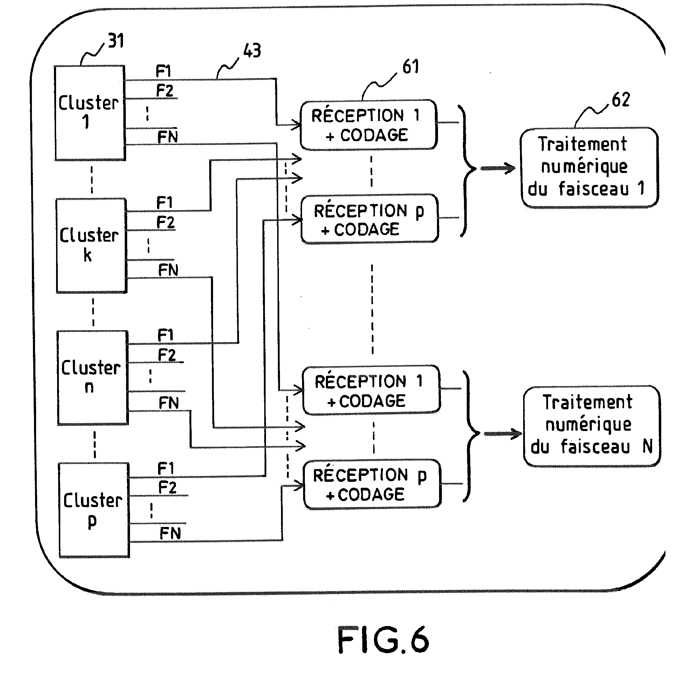

La figure 6 illustre une manière simple de former les N faisceaux déterminés à partir des clusters. Chaque sortie 43 de cluster 31 correspondant à un faisceau donné est combinée avec les sorties correspondantes des autres clusters. Pour chacun des faisceaux, les plans de phase des clusters sont tous orientés perpendiculairement à la direction du faisceau : aucune remise en phase n'est nécessaire et la combinaison se fait au moyen d'un simple dispositif sommateur. Comme le montre la figure, cette sommation peut être par exemple effectuée de manière numérique 62 après réception et codage 61, la formation du faisceau étant réalisée au niveau du traitement du signal. Il est bien entendu possible de l'effectuer d'autre façon par exemple en fréquence intermédiaire. Dans l'exemple de la figure, le dispositif peut être un circuits numérique sommateurs à N entrées. On construit ainsi les N faisceaux désirés à l'aide de N dispositifs sommateurs 62.

A la sortie de chaque sommateur on obtient avantageusement un signal correspondant à celui que l'on obtiendrait à l'aide d'une antenne à balayage mono faisceau dont le faisceau pointerait une direction identique au faisceau considéré.

Pour diminuer le nombre de voies de réception, il est possible de regrouper les clusters en sous-réseaux dont le nombre est défini en fonction du nombre de brouilleurs que l'on souhaite éliminer. En effet, des études menées par ailleurs montrent que dans le cas d'une antenne à balayage électronique à un seul faisceau, cette antenne étant brouillée dans des directions différentes par M brouilleurs, il est possible d'annuler par calcul les signaux reçus dans la direction des brouilleurs si l'on dispose d'un nombre d'antennes indépendantes égal à M+1.

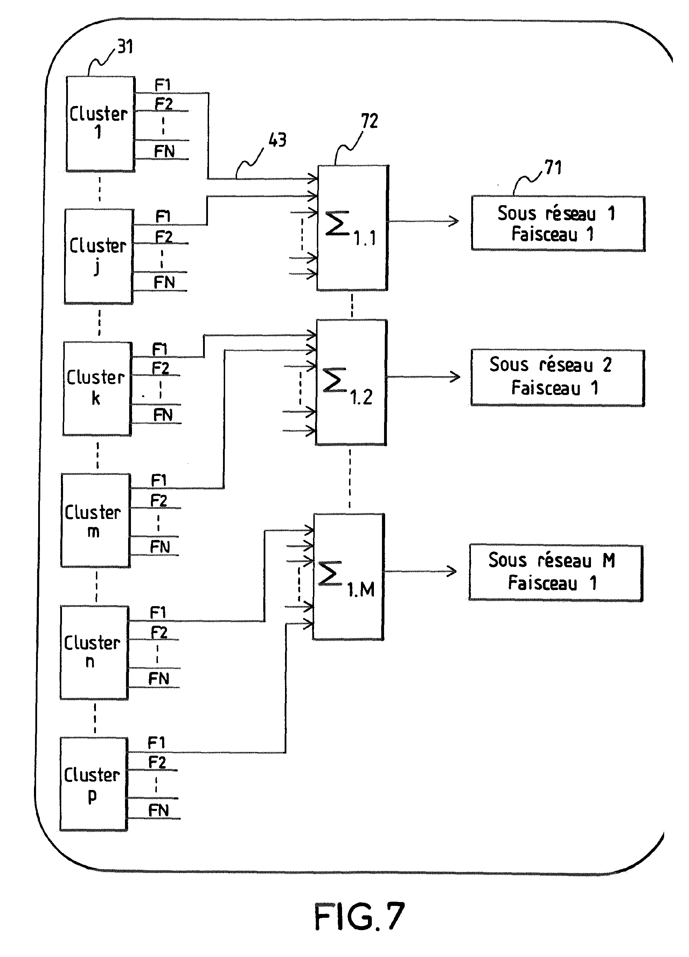

La figure 7 illustre une façon possible d'intégrer avantageusement le principe d'antibrouillage cité précédemment à la structure en sous-réseaux de l'antenne selon l'invention.

Les différentes sorties des clusters 31 sont recombinées de façon à obtenir une organisation en MxN sous-réseaux 71. Chaque ensemble de M sous-réseaux est dédié à un faisceau particulier. Il est constitué d'un certain nombre P de clusters dont les sorties correspondant au faisceau considéré sont sommés au travers d'un dispositif sommateur 72. Ce dernier est constitué du nombre de circuits sommateurs nécessaires pour effectuer cette somme. Le nombre P de clusters entrant dans la composition d'un sous réseau dépend bien évidemment du nombre de sous réseaux à réaliser. Sur la figure 7 est représentée à titre d'exemple la formation d'un ensemble de sous reseaux correspondant au faisceau 1.

Pour un faisceau donné le nombre M de sous-réseaux est au moins égal au nombre de brouilleurs dont on veut se protéger, majoré de un. A l'instar d'un cluster chaque sous-réseau se comporte comme une antenne élémentaire dont le plan de phase est orienté dans la direction du faisceau. Avec la structure mise en place on dispose donc avantageusement pour chaque faisceau d'un groupe de M antennes et donc d'une possibilité de s'affranchir de M-1 brouilleurs.

Comme les clusters dont ils sont des combinaisons, les sous-réseaux ont des plans de phase convenablement orientés par rapport aux faisceaux. Leur combinaison en un faisceau présente l'avantage de ne pas engendrer de lobes de réseaux.

Au regard des exemples de représentations donnés par les figures 3, 4 et 7 une antenne à FFC adaptative selon l'invention apparaît donc comme une structure de réception constituée d'un grand nombre de T/R modules regroupés en clusters disposant chacun d'un nombre N de sorties, égal au nombre de faisceaux à synthétiser. Les sorties des clusters correspondant à un même faisceau sont recombinées par groupes pour former des sous-réseaux qui sont, pour chaque faisceau, en nombre au moins égal au nombre de brouilleurs dont on souhaite se débarrasser majoré de un.

Le nombre et l'orientation relative des faisceaux sont donc fixés par construction. Pour pointer les faisceaux ainsi constitués dans une direction générale donnée on oriente le plan de phase global de l'antenne dans la direction voulue. Pour cela, on applique par exemple un déphasage au signal reçu par chaque T/R module.

A titre d'exemple on peut noter qu'une antenne à FFC adaptative selon l'invention comportant 4096 T/R modules et pouvant former 4 faisceaux simultanés sera donc composée de 256 clusters comprenant chacun 16 modules et 4 circuits combineurs à 16 entrées. Si de plus on souhaite **disposer de 16** sous-réseaux par faisceau, l'antenne sera également composée de 64 dispositifs sommateurs reliés chacun à 4 clusters.

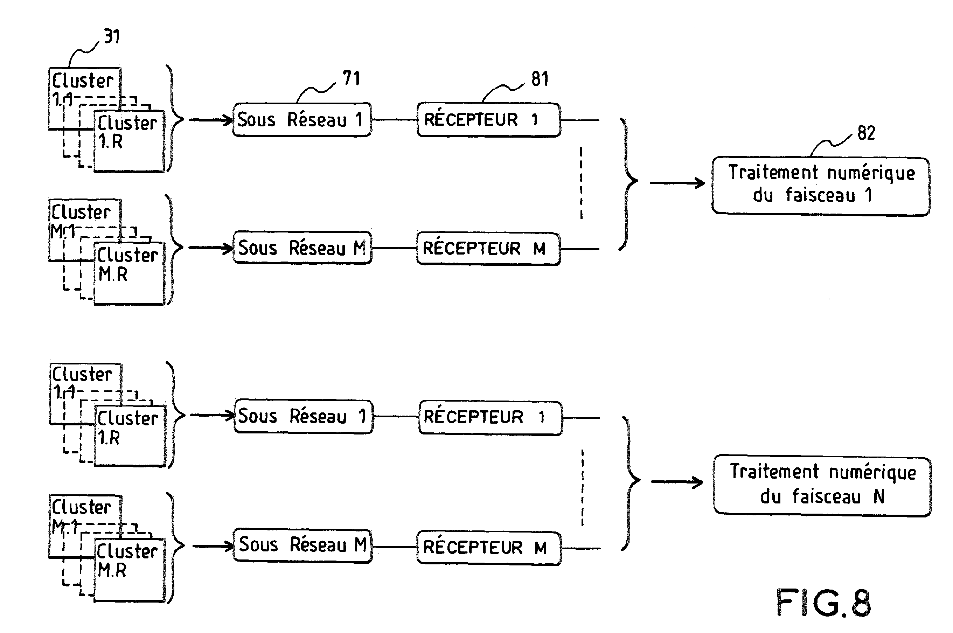

La figure 8 représente une illustration possible de l'arrangement et de traitement des signaux issus d'une antenne selon l'invention. Le signal est reçu simultanément par tous les clusters, chaque cluster 31 disposant d'autant de sorties qu'il y a de faisceaux à former. Les sorties correspondant à un faisceau donné sont ensuite combinées par groupe pour former des sous-réseaux 71, le nombre de sous-réseaux par faisceau étant égal au nombre de brouilleurs dont on veut se protéger. Le signal correspondant à chaque sous-réseau suit une voie de réception 81 où il est converti sous forme numérique après démodulation. La recombinaison des signaux issus des sous-réseaux en un seul signal correspondant à un faisceau et les divers traitements appliqués à ce signal s'effectuent par exemple sous forme numérique 82. Parmi ces traitements on pourra par exemple trouver l'élimination des brouilleurs.

La chaîne de traitement des signaux issus des sous-réseaux présentée succinctement ici, n'est bien sûr par limitative. Elle n'est donnée qu'à titre d'exemple.

Dans ce qui précède l'antenne à FFC adaptative selon l'invention a surtout été décrite du point de vue de la réception. En ce qui concerne les antennes à FFC actuelles, la formation de faisceaux en réception s'accompagne nécessairement d'une émission avec un diagramme élargi. Un lobe d'émission large permet de recueillir de l'énergie dans toutes les directions pointées par les faisceaux. En revanche, il présente comme inconvénient de priver les antennes à FFC actuelles de sélectivité à l'émission.

L'antenne à FFC adaptative selon l'invention permet avantageusement de supprimer cet inconvénient et de retrouver une sélectivité spatiale à l'émission. Le principe mis en oeuvre consiste à associer l'antenne selon l'invention à un dispositif permettant d'émettre séquentiellement une impulsion dans la direction de chacun des faisceaux. Il consiste également à effectuer une coloration du signal composant l'impulsion émise, c'est à dire à faire varier la fréquence du signal émis en fonction de la direction pointée.

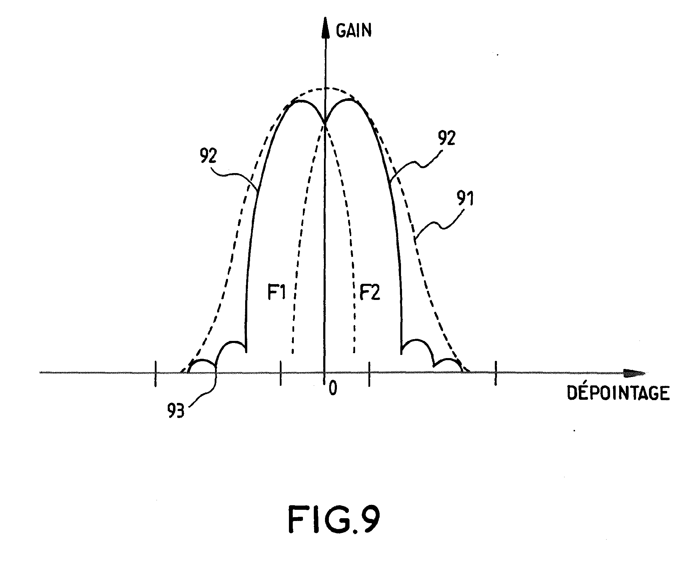

La figure 9 est une représentation partielle de la forme d'un diagramme d'émission selon l'invention. Elle illustre la façon dont peut être réalisée l'émission avec une antenne à FFC adaptative selon l'invention. Dans un but de simplification la représentation de la figure est effectuée dans un seul plan. Sur cette figure sont représentés dans un plan deux lobes d'émission pointant dans les directions des faisceaux F1 et F2. A l'émission d'une seule impulsion suivant un lobe large 91, on substitue ici l'émission de plusieurs impulsions successives suivant des lobes étroits 92 orientés dans la direction des faisceaux formés.

Suivant le faisceau auquel elle est associée, chaque impulsion est émise au travers des T/R modules, avec une loi de phase correspondant à la direction pointée par le faisceau. On retrouve donc ainsi pour chaque direction une sélectivité spatiale qui s'apparente à celle d'une antenne à balayage mono faisceau.

Les lobes d'antennes présentent de façon générale des lobes secondaires 93 qui occasionnent, dans le cas où tous les faisceaux correspondent à la même fréquence, un étalement du diagramme d'émission. Un signal parasite pourrait alors par ce biais être émis dans une direction autre que celle du lobe principal. Il en va de même à la réception. L'émission d'un signal dans la direction d'un faisceau F1 s'accompagne de l'émission d'un signal parasite dans une autre direction qui sera également reçu.

Dans la mesure où les directions pointées par les faisceaux sont assez proches il peut y avoir comme dans le cas de la figure 9 un chevauchement de diagrammes correspondants. Dans un tel cas, la direction dans laquelle est émis le signal issu d'un lobe secondaire de F1 peut correspondre à la direction d'un autre faisceau F2, ou du moins à celle du lobe secondaire qui accompagne le lobe principal de F2.

Un écho provenant d'un signal émis par un lobe secondaire du faisceau F1 peut ainsi être reçu par un lobe secondaire du faisceau F2 et apparaître comme provenant de la direction de F2.

Pour éliminer les phénomènes parasites liés aux lobes secondaires 93, on fait varier, d'une direction de faisceau à l'autre, la fréquence du signal émis. A un faisceau F donné correspond donc une fréquence d'émission - et donc une fréquence de réception - donnée.

Ainsi un signal parasite issu d'un lobe secondaire d'un faisceau F1 sera émis à la fréquence correspondant au faisceau F1. N'étant pas à la même fréquence il ne pourra donc pas être reçu comme un signal provenant d'une émission dans la direction de F2.

L'émission selon un lobe etroit, au travers d'une antenne selon l'invention, d'une impulsion composite telle que celle qui vient d'être décrite, permet donc avantageusement de réaliser la sélectivité spatiale à l'émission.

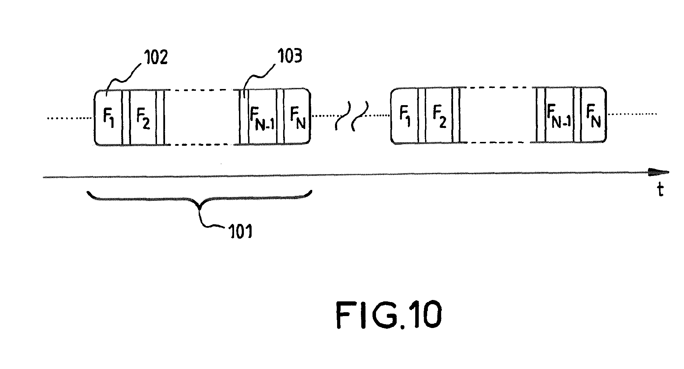

La figure 10 donne une représentation schématique de la structure temporelle du signal émis. L'exemple présenté est celui d'une émission d'impulsions longues, utilisée notamment dans les radars à compression d'impulsion. Dans un fonctionnement classique en compression d'impulsion, la fréquence du signal émis varie du début à la fin de l'impulsion. Cette variation peut se faire de manière continue selon une loi de variation donnée ou encore de façon discontinue selon un code.

Dans le cas de l'invention l'impulsion longue est en réalité une impulsion composite 101 constituée d'au moins N impulsions longues élémentaires 102. Chaque impulsion élémentaire correspond à un faisceau et possède une fréquence centrale $f_c$ autour de laquelle varie la fréquence du signal émis. Dans le cas où l'on souhaite former par exemple quatre faisceaux, le nombre d'impulsions élémentaires sera de quatre.

Ces impulsions élémentaires qui constituent l'impulsion composite sont séparées les unes des autres par un intervalle de temps 103. Cet intervalle de temps est notamment utilisé pour opérer le changement de fréquence et la stabilisation des oscillateurs locaux. Il permet également d'effectuer les changements de phase nécessaires pour obtenir le dépointage des faisceaux correspondant à chacune des fréquences.

L'émission d'une impulsion complète correspond donc à l'émission successive de plusieurs impulsions. Chaque impulsion est émise dans la direction d'un faisceau donné et à la fréquence correspondante.

Les systèmes de réception associés à chacun des faisceaux sont bien évidemment accordés sur la fréquence associée au faisceau considéré. Ainsi pour un faisceau donné, le risque de réception d'un signal provenant de la direction couverte par un autre faisceau se trouve donc écarté.

La description qui précède montre que l'antenne à FFC adaptative selon l'invention présente notamment les caractéristiques avantageuses suivantes :

- En réception, elle permet d'analyser simultanément les signaux issus des faisceaux constitués. Ces faisceaux sont avantageusement dépourvus des lobes de réseaux qui dégradent les performances des antennes actuelles.
- A l'émission elle permet, si elle est associée à un système adéquat de gestion et de synthèse de la fréquence des impulsions d'émission, de réaliser une émission présentant une sélectivité spatiale comparable à une antenne mono faisceau classique.

Cette antenne présente donc avantageusement pour chacun des faisceaux formés, toutes les caractéristiques d'une antenne mono faisceau. L'orientation relative des différents faisceaux étant fixée par la structure en clusters, la direction générale du pointage de l'antenne est réalisée par modification de l'orientation du plan de phase global. Cette orientation est effectuée en appliquant le déphasage correspondant au niveau de chaque T/R module.

## Revendications

1. Antenne multifaisceaux adaptative à Formation de Faisceau par le calcul permettant la constitution simultanée de plusieurs faisceaux, **caractérisée en ce qu'**elle présente pour chaque faisceau un plan de phase orienté sensiblement perpendiculairement à la direction du faisceau, sa structure étant composée de clusters (31), un cluster comportant au moins un ensemble de T/R modules (32) et un ensemble de circuits combineurs (41), la sortie de chaque T/R module du cluster étant distribuée à l'entrée de chaque circuit combineur affectée à ce module,le cluster comportant un nombre de circuits combineurs au moins égal au nombre de faisceaux formés par l'antenne.

2. Antenne selon la revendication 1, **caractérisée en ce que** les circuits combineurs (41) effectuent la sommation des voies issues de chaque T/R module (32) après avoir affecté à chacune des voies un déphasage correspondant au faisceau considéré.

3. Antenne selon l'une quelconque des revendications précédentes, **caractérisée en ce que** la formation d'un faisceau est réalisée par traitement numérique (62), après réception et codage (61), des signaux (43) issus des clusters (31) et correspondants au faisceau.

4. Antenne selon l'une quelconque des revendications 1 à 2, **caractérisée en ce que** les clusters (31) sont associés par l'intermédiaire de dispositifs sommateurs (72) pour former des sous-réseaux, les sorties des clusters d'un même groupe qui correspondent au même faisceau étant reliées aux entrées d'un dispositif sommateur pour former un sous réseau (71) relatif au faisceau, l'ensemble de sous réseaux relatifs au même faisceau formant le faisceau lui-même.

5. Antenne selon la revendication précédente, **caractérisée en ce que** le nombre de sous-réseaux (71) constitués est égal au nombre de brouilleurs dont on veut s'affranchir majoré de un.

6. Radar équipé d'une antenne selon l'une quelconque des revendications précédentes, **caractérisé en ce qu'**il comporte des moyens de synthèse et d'émission d'une impulsion composite (101) constituée d'impulsions élémentaires (102) ayant chacune une fréquence propre, chaque impulsion étant séparée des impulsions précédente et suivante par un intervalle de temps donné (103).

7. Radar selon la revendication précédente, **caractérisé en ce que** l'impulsion composite (101) synthétisée et émise est constituée d'un nombre d'impulsions élémentaires (102) au moins égal au nombre de faisceaux formés.

8. Radar selon l'une quelconque des revendications 6 à 7, **caractérisé en ce que** l'intervalle de temps (103) séparant deux impulsions élémentaires (102) composant l'impulsion globale est d'une durée suffisante pour permettre aux circuits faisant la synthèse du signal de se stabiliser après changement de fréquence, et pour permettre la correction de l'écart d'orientation du plan de phase global de l'antenne, écart induit par le changement de fréquence et le pointage des différents faisceaux.

9. Radar selon l'une quelconque des revendications 6 à 8, **caractérisé en ce qu'**il associe à chaque faisceau une impulsion élémentaire dont la fréquence est associée au faisceau, cette impulsion étant émise dans la direction du faisceau.

FIG.1

FIG.2

FIG.3

EP 1 351 333 A2

FIG.4

FIG.5

FIG.6

FIG.7

EP 1 351 333 A2

**31**

| Cluster 1.1 → Cluster 1.R | → | Sous Réseau 1 **71** | RÉCEPTEUR 1 **81** |
| Cluster M.1 → Cluster M.R | → | Sous Réseau M | RÉCEPTEUR M |

Traitement numérique du faisceau 1 **82**

| Cluster 1.1 → Cluster 1.R | → | Sous Réseau 1 | RÉCEPTEUR 1 |
| Cluster M.1 → Cluster M.R | → | Sous Réseau M | RÉCEPTEUR M |

Traitement numérique du faisceau N

# FIG.8

FIG.9

FIG.10